# EUROPEAN PATENT APPLICATION

(11) **EP 0 993 131 A1**
(43) Date of publication of application: **12.04.2000**
(21) Application number: 98308125.8
(22) Date of filing: 06.10.1998
(51) Int. Cl.: H04B 7/185

(54) **Communication apparatus and method for multimode terminal with removable data store**

(71) Applicant: ICO Services Ltd., London W6 9BN (GB)
(72) Inventor: Poisson, Lionel, London W4 1DD (GB)
(74) Representative: Musker, David Charles

(57) **Abstract**

A multimode terminal for communicating with at least first and second communications networks, said first network being one in which terminals include a removable data store, said second network being one in which terminals do not normally include a removable data store: comprising; a removable data store storing first and second security data for communications with respective first and second communications networks, such data for a said second network normally being stored in a non-removable data store; an interface for communicating with said removable data store; first processing means adapted to read data related to said first security data therefrom for communicating with a first network; and second processing means for communicating with a said second network; characterised in that the removable data store holds said second security data for access by an application program stored on said removable data store; the application program supplies the second security data to the first processing means on a predetermined occasion; and the first processing means supplies the second security data to the second processing means for use thereby.

## Description

### FIELD OF THE INVENTION

This invention relates to communications with a mobile user, and particularly (but not exclusively) to such communications in which the link to the mobile user is via a satellite or satellites.

Terrestrial cellular communication systems are well known in the art and a number of standards, such as the GSM standard and the PCN standard exist which define different signalling protocols for them. Details of these standards are given for example in "Mobile Radio Technology" by Gordon White, Butterworth Heinemann, 1994. The GSM and PCN systems are digital communication systems and allow messaging and data communications in addition to voice communications. The communications in the basic GSM system are defined in recommendations 02.17 and 11.11, available from the European Telecommunications Standards Institute (ETSI).

Mobile satellite communication systems have also been proposed in which radio frequency links are provided by a constellation of satellites. These satellite communication systems provide much greater coverage than terrestrial cellular systems. One example of such a system is the ICO™ system, aspects of which are described in patent publications WO 95/28747, WO 96/03814 and GB 2,295,296A. Other examples include the Iridium™ satellite cellular system, described for example in EP-A-0365885, and the Odyssey™ mobile communication system described for example in EP-A-0510789, EP-A-0575678 and EP-A-0648027.

An alternative proposed satellite cellular system is described in EP 0536921 and EP 0506255.

Since such systems operate over a wireless link, there is a risk of interception of calls by unauthorised persons.

The GSM system includes an optional encryption scheme described in, for example, "Security aspects and the implementation in the GSM-system"; Peter C.J. van der Arend, paper 4a, Conference Proceedings of the Digital Cellular Radio Conference (DCRC), October 12th-14th 1988, published by Deutsche Bundespost, France Telecom and Fernuniversitate. Greater detail is given in the following GSM recommendations:

GSM 02.09 "Security Aspects"; GSM 03.20 "Security Related Network Functions"; GSM 03.21 "Security Related Algorithms".

In this scheme, a database known as the Authentication Centre (AuC) holds an individual encryption key number (Kᵢ) for each subscriber to the authentication service, which is also stored on a removable chip card known as the Subscriber Information Module (SIM) held in the subscriber's mobile terminal. The SIM comprises a microprocessor, read only memory and random access memory, and communicates with the processor of the mobile terminal through a card reader.

The subscriber has no direct access to the data stored in the SIM. During communications, the original data held on the module is not read from the module at any stage, and the module is designed to make it difficult to read the data.

Where a secure session is requested, a random number (RAND) is generated by the Authentication Centre and used, together with the customer's key (Kᵢ), to calculate a ciphering key (K_{c}) used during the session for ciphering and deciphering messages to/from the subscriber.

The random number is sent to the subscriber's mobile terminal via the Base Transceiver Station (BTS). The mobile terminal passes the random number to the SIM, which calculates the ciphering key K_{c} using an algorithm termed A5.

Thus, the random number is sent over the air, but not the customer's key Kᵢ or the ciphering key K_{c}.

The random number and the ciphering key K_{c} are sent to the Home Location Register (HLR) database storing details for the subscriber concerned and are also sent to the Visiting Location Register (VLR) for the area where the use is currently located, and are supplied to the BTS via which the mobile is communicating.

The ciphering key K_{c} is used, together with the current TDMA frame number, to implement the A5 ciphering algorithm in the mobile terminal and the Base Transceiver Station. Thus, the individual user key Kᵢ is stored only at the authentication centre and the SIM, where the ciphering key K_{c} is calculated and forwarded to the BTS and the mobile terminal.

Cellular telephone systems differ in various ways. For example, GSM systems differ from DCS 1800 systems mainly in the frequencies used for communication, but the signalling and other signal processing aspects of the systems are very similar. On the other hand, GSM and other similar systems differ substantially from the American IS-41 digital cellular system.

The IS-41 standard also provides authentication and privacy mechanisms, specifically a key called the A-key, held on the mobile terminal; the Mobile Identification Number (MIN), the Electronic Serial Number (ESN), and the CAVE (Cellular Authentication and Voice Encryption) algorithm. Such secure information is used by the Authentication Centre (AC) and mobile terminal in a generally similar manner to that described above in relation to GSM.

However, in the IS-41 system, no provision for separate storage on subscriber identity modules is provided, it being assumed that the authentication data is stored within the telephone handset. In particular, the A-key is typed into the phone, on acquisition, by a new subscriber. Thus, the user cannot as easily change handset as in GSM.

"Dual mode" phones are now becoming available, which can operate on either of two different systems, for example GSM or DCS 1800. Further, it is contemplated that forthcoming mobile satellite phones will mainly be dual mode, so as to preferentially use the terrestrial networks where available, and rely on the satellite networks to fill in capacity.

In providing a dual mode phone which combines a GSM-type phone (for example, a GSM telephone or an ICO (™) or Iridium (™) satellite handset) the authentication data used while communicating with the GSM-type telephone is therefore provided on a subscriber identity model, as in the single mode phone, but some thought must be given to the storage of the IS-41 authentication data.

The obvious solution is simply to provide the phone as a combination of an IS-41 handset with stored authentication data in the handset (phone) processor, and a GSM-type phone with the authentication data stored on the subscriber identity module. However, this solution does potentially make it difficult to transfer the use of the phone from one subscriber to another, since the IS-41 authentication data is not removable.

Also, the security given is relatively low, since it is more easy to tamper with the memory of the handset should it fall into the wrong hands than with the subscriber identity module.

An alternative solution, proposed by Ericsson in GSM NA SIM specification-revision 2.0, dated 1 May 1998, suggests the modification of the SIM to provide a specialised device which stores also the IS-41 authentication data, with similar security to the GSM data. In this case, rather than reading the authentication data from its own memory, the handset processor would be arranged to read the data from particular designated memory locations of the subscriber identity module (designated in all SIMs), using specially provided procedures in the mobile phone processor.

In the original GSM system, the intention was to allow the processor of the mobile terminal to interrogate the SIM, to request data, which the SIM would then return. Such data could, for example, be authentication data, stored messages or telephone numbers.

More recently, draft GSM technical specification 11.14, version 5.6.0 of December 1997 defines a phase 2+ upgrade to the SIM - mobile terminal interface. The upgrade adds what is referred to as the "SIM application tool kit". This "tool kit" is a set of procedures which can be used by applications (i.e. control programs) running on the processor of the SIM.

In particular, the SIM can initiate actions to be taken by the mobile terminal (such as causing the terminal to display text supplied by the SIM, or to send a short message, or to set up a voice call); downloading data to the SIM from a telecommunications network (using the short message service and cell broadcast mechanisms) and call control by the SIM (allowing the SIM to allow, bar or modify a call requested by the user through the mobile terminal).

The present invention is intended to provide an improved dual-mode telephone, storing authentication data for a first type of telephone system in which the authentication data is usually stored on the handset, and a second system in which the authentication data is normally stored on a removable module, in which both sets of authentication data are stored on the removable module, the data for the first system being accessible by a program on the subscriber identity module, and proactively sent from the subscriber identity module for use.

Thus, a dual-mode phone may make use of a subscriber identity module conforming to the GSM toolkit standard, on an IS-41 type telephone. This enables the cost effective development and provision of a highly secure dual mode telephone capable of operating with an IS-41 or a GSM-type network, since the adaptation of the SIM is to add an application thereon only to those cards which are for dual mode subscribers.

In another aspect, the present invention provides a removable processor module for use in a such telephony terminal.

Other aspects and preferred embodiments of the invention are as described or claimed hereafter, with advantages which will be apparent from the following.

### BRIEF DESCRIPTION OF THE DRAWINGS

Embodiments of the invention will now be described, by way of example only, with reference to the accompanying drawings, in which:
Figure 1 is a block diagram showing schematically the elements of a first communications system embodying the present invention;
Figure 2a is an illustrative diagram showing schematically the elements of mobile terminal equipment suitable for use with the present invention; and
Figure 2b is a corresponding block diagram;
Figure 3 is a block diagram showing schematically the elements of an Earth station node forming part of the embodiment of Figure 1;
Figure 4a illustrates schematically the beams produced by a satellite in the embodiment of Figure 1;
Figure 4b illustrates schematically the disposition of satellites forming part of Figure 1 in orbits round the earth;
Figure 5 is a block diagram illustrating memory access in a first embodiment;
Figure 6a is a flow diagram showing schematically the process performed by the Subscriber Identity Module of Figure 2 in a first embodiment; and
Figure 6b is a flow diagram showing schematically the corresponding process performed by the main terminal processor of the terminal of Figure 2 in the first embodiment;
Figure 7 is a block diagram illustrating memory access in a second embodiment;
Figure 8 is a flow diagram showing schematically the process performed by the terminal processor according to the second embodiment;
Figure 9a is a flow diagram showing schematically the process performed by the Subscriber Identity Module according to a third embodiment; and
Figure 9b is a flow diagram showing schematically the corresponding process performed by the main terminal processor according to the third embodiment.

### GENERAL ASPECTS OF EMBODIMENTS

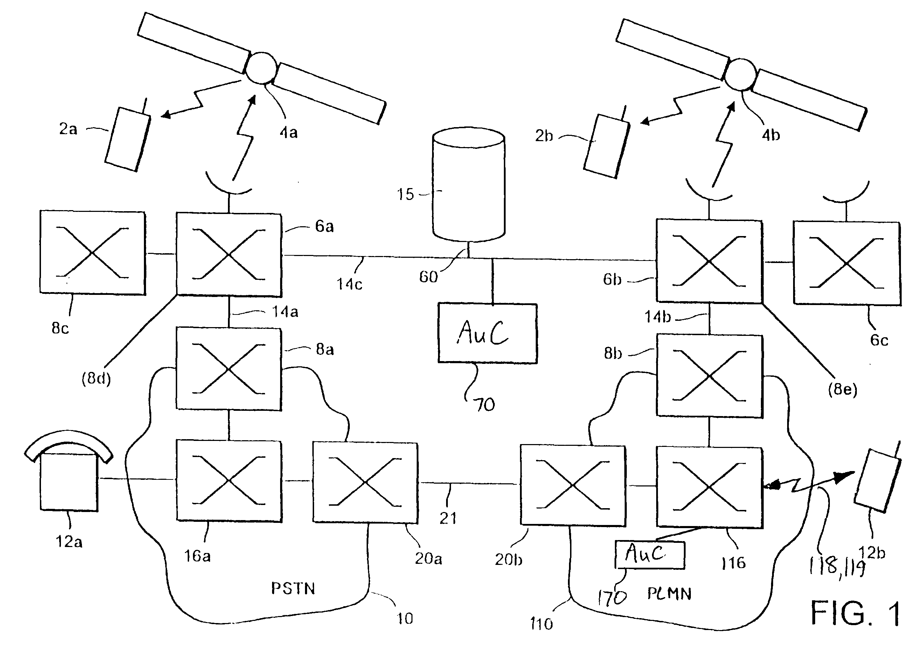

Referring to Figure 1, a satellite communications network according to this embodiment comprises mobile user terminal equipment 2a, 2b (e.g. handsets 2a and 2b); orbiting relay satellites 4a, 4b; satellite earth station nodes 6a, 6b; satellite system gateway stations 8a, 8b; terrestrial (e.g. public switched) telecommunications networks 10; and fixed telecommunications terminal equipment 12a; terrestrial (e.g. public land) mobile telecommunications networks (PLMNs) 110 and terrestrial mobile terminal equipment 12b.

Interconnecting the satellite system gateways 8a, 8b with the earth station nodes 6a, 6b, and interconnecting the nodes 6a, 6b with each other, is a dedicated ground-based network comprising channels 14a, 14b, 14c. The satellites 4, earth station nodes 6 and lines 14 make up the infrastructure of the satellite communications network, for communication with the mobile terminals 2, and accessible through the gateway stations 8.

A terminal location database station 15 (equivalent to a GSM HLR) is connected, via a signalling link 60 (e.g. within the channels 14 of the dedicated network) to the gateway station and earth stations 6. An Authentication Centre (AuC) 70, comprising a store, a computer, and a communications link to a data channel of the network, controls the authentication of satellite mobile terminals 2.

The PSTNs 10 comprise, typically, local exchanges 16a, 16b to which the fixed terminal equipment 12a, 12b is connected via local loops 18a, 18b; and international switching centres 20a, 20b connectable one to another via transnational links 21 (for example, satellite links or subsea optical fibre cable links). The PSTNs 10a, 10b and fixed terminal equipment 12a, 12b (e.g. telephone instruments)are well known and almost universally available today.

The PLMNs 110 comprise, typically, mobile switching centres (MSCs) 116 to which the terrestrial mobile terminals 112 are connected via local radio paths 118 and base stations 119 (not shown); and international gateways 20b, together with an Authentication Centre (AC) 170.

For voice communications via the satellite network, each mobile terminal apparatus 2 is in communication with a satellite 4 via a full duplex channel (in this embodiment) comprising a downlink channel and an uplink channel, for example (in each case) a TDMA time slot on a particular frequency allocated on initiation of a call, as disclosed in UK patent applications GB 2288913 and GB 2293725. The satellites 4 in this embodiment are non geostationary, and thus, periodically, there is handover from one satellite 4 to another.

For voice communications via the PLMN, each mobile terminal apparatus 2 is in communication with a mobile switching centre 116 via a base station 119 (not shown).

### Mobile terminal 2

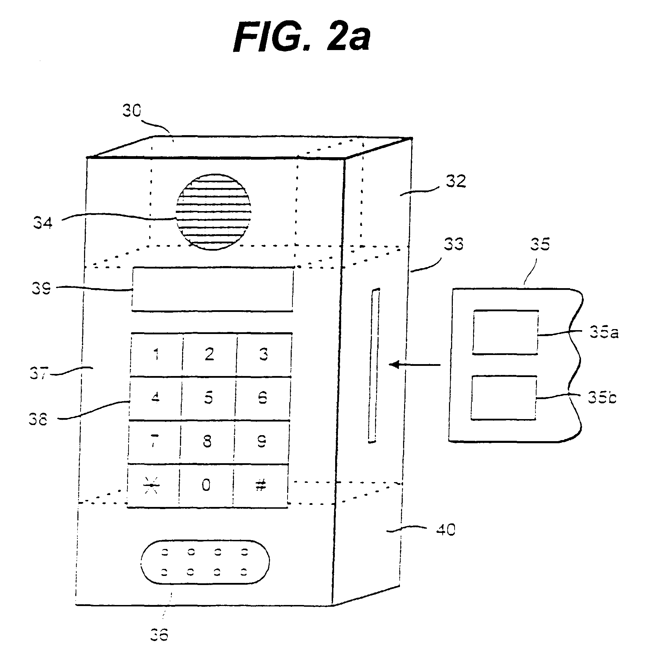

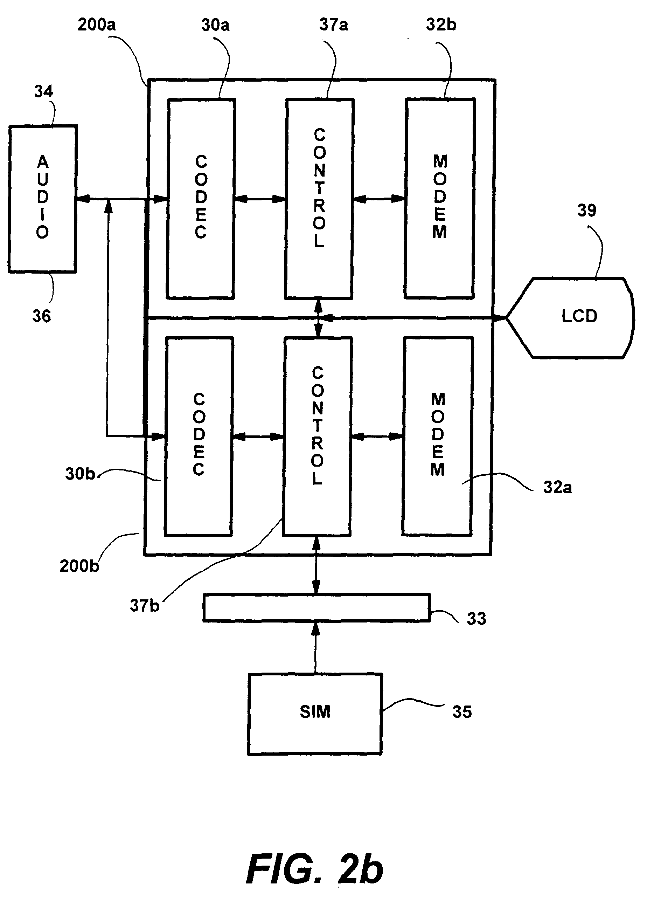

Referring to Figures 2a and 2b, a dual mode mobile terminal handset equipment 2a of Figure 1 is shown.

It comprises a combination of a satellite handset, similar to those presently available for use with the GSM system, and a terrestrial handset suitable for D-AMPS (IS-41) communications.

The user interface components (microphone 36, loudspeaker 34, display 39 (for example a liquid crystal display) and keypad components 38) and power supply (battery 40) are shared, i.e. used in both modes.

Apart from such common components, the terminal comprises an IS41 functional unit 200a and a satellite functional unit 200b. Each comprises a digital low rate coder/decoder 30a, 30b; modem 32a, 32b; control circuit 37a, 37b; radio frequency (RF) interface 32a and 32b and antennas 31a and 31b, suitable for satellite and terrestrial IS41 communications respectively.

A 'smart card' reader 33 receiving a smart card (subscriber identity module or SIM) 35 storing user information are also provided, connected to communicate with the satellite control circuit 37b. Specifically, the SIM 35 includes a processor 35a and permanent memory 35b.

The SIM 35 preferably complies with GSM Recommendations and/or Technical Specifications 02.17 ("Subscriber Identity Modules"), 11.11 and 11.14, and is preferably implemented as an industry standard "Smart Card" as described in International Standards ISO 7810, 7811 and 7816; these and GSM 02.17, 11.11 and 11.14 are all incorporated herein by reference.

The SIM memory 35b stores various subscriber identity and security data, including the International Mobile Subscriber Identity (IMSI), and (for use in the satellite communications mode) the A3 and A8 algorithms, and the key Kᵢ. The manner of use of these is as described in the above-cited GSM specifications and papers.

Also, data such as lists of numbers and Short Messages is stored in locations of the SIM 35 which may be interrogated by the processor 37b.

A suitable SIM can be developed using the SIMphonIC™ SIM Toolkit development system available from De La Rue Card Systems, UK, or the GemPlus GemXplore™ 98 and GemXplore™ CASE development systems available from GemPlus, or equivalent systems available from Siemens, Schlumberger, Giesecke und Devrient and others.

In this embodiment, the SIM 35 is not merely a passive information store, but contains a processor 35a which supports the SIM toolkit protocols. Accordingly, it operates under control of an operating system 352 and an application 354, both of which are stored in the memory 35b.

The operating system is arranged to communicate with the processor 37 of the terminal 2 using the SIM toolkit procedures defined in GSM recommendation 11.14, to pass data to and from the application 354. It may for example be the STARSIM operating system of Giesecke und Devrient, Munich, Germany, or that of one of the other suppliers identified above.

The control circuits 37a, 37b (in practice integrated with the respective coder 30) consist of a suitably programmed microprocessor, microcontroller or digital signal processor (DSP) chip. Each control circuit 37 performs various functions including framing speech and data into TDMA time frames for transmission (and likewise demultiplexing received TDMA frames); and performing encryption or enciphering.

Separate chipsets may be provided, each for implementing one of the terrestrial and satellite system functionalities 200a 200b. Alternatively, a single processor may be programmed to perform the coding and control for both functionalities. In each case, separate RF components are provided, but user interface components are shared.

The embodiments described in (IDEA 15) incorporated by reference herein, are preferably included.

The satellite coder/decoder (codec) 30a in this embodiment comprises a low bit rate coder 30a, generating a speech bit stream at around 3.6 kilobits per second, together with a channel coder 30b applying error correcting encoding, to generate an encoded bit stream at a rate of 4.8 kilobits per second.

The IS41 codec 30b performs the IS41 encoding and, preferably, the IS41 CAVE (cellular authentication and voice encryption) algorithm.

The terminal processor 37b is programmed to operate the GSM 11.14 interface, allowing it to be controlled by the SIM 35, and to pass data from and to the SIM 35. It may be based on an existing GSM terminal which can do so, for example the Siemens S10, the Alcatel One Touch Pro, the Motorola CD90 or CD930, or the Ericsson 688 or 888, together with a suitable Air Interface for satellite communications.

Accordingly,the GSM processor 37b can interrogate the memory 35b of the SIM 35, and the SIM processor 35a can command the GSM processor 37b to execute commands defined in the SIM Toolkit, via the reader interface 33.

### Earth Station Node 6

The earth station nodes 6 are arranged for communication with the satellites.

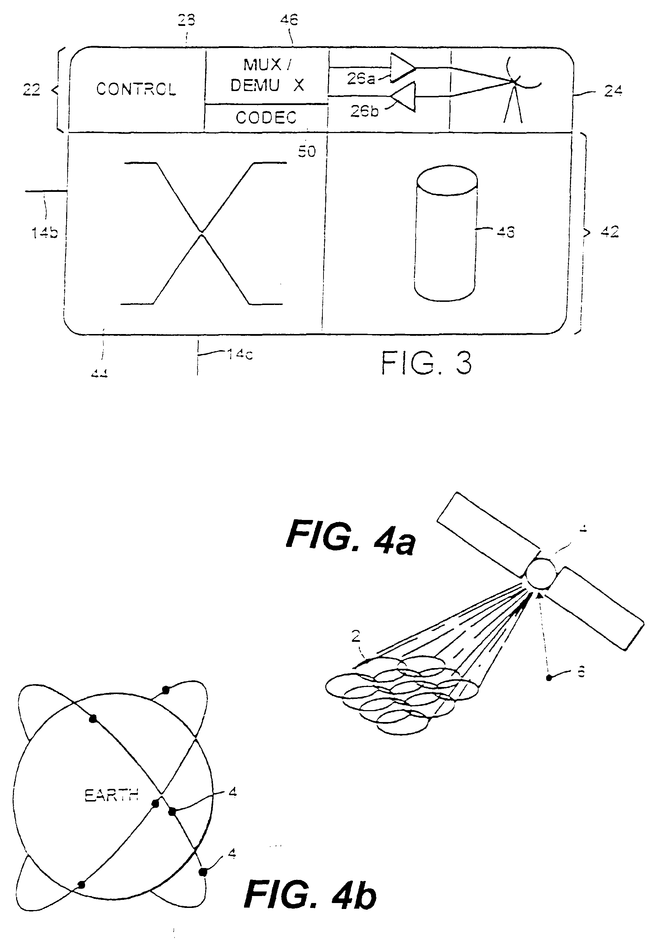

Each earth station node 6 comprises, as shown in Figure 3, a conventional satellite earth station 22 consisting of at least one satellite tracking antenna 24 arranged to track at least one moving satellite 4, RF power amplifiers 26a for supplying a signal to the antenna 24, and 26b for receiving a signal from the antenna 24; and a control unit 28 for storing the satellite ephemera data, controlling the steering of the antenna 24, and effecting any control of the satellite 4 that may be required (by signalling via the antenna 24 to the satellite 4).

The earth station node 6 further comprises a mobile satellite switching centre 42 comprising a network switch 44 connected to the trunk links 14 forming part of the dedicated network. A multiplexer 46 is arranged to receive switched calls from the switch 44 and multiplex them into a composite signal for supply to the amplifier 26 via a low bit-rate voice codec 50. Finally, the earth station node 6 comprises a local store 48 storing details of each mobile terminal equipment 2a within the area served by the satellite 4 with which the node 6 is in communication.

### Gateway 8

The gateway stations 8a, 8b comprise, in this embodiment, commercially available mobile switch centres (MSCs) of the type used in digital mobile cellular radio systems such as GSM systems.

The gateway stations 8 comprise a switch arranged to interconnect incoming PSTN lines from the PSTN 10 with dedicated service lines 14 connected to one or more Earth station nodes 6.

### Database Station 15

The database station 15 comprises a digital data store, a signalling circuit, a processor interconnected with the signalling circuit and the store, and a signalling link interconnecting the database station 15 with the gateway stations 8 and Earth stations 6 making up satellite system network, for signalling or data message communications.

It stores data for terminal apparatus 2, for example position data, billing data, authentication data and so on, like the Home Location Register (HLR) of a GSM system.

### Authentication Centres 170, 70

Each authentication centre stores security data corresponding to that held on the terminal 2. The satellite authentication centre 70 stores the GSM authentication data for the satellite system, and the PLMN authentication centre stores the authentication data for the IS-41 system.

### Satellites 4

The satellites 4a, 4b comprise generally conventional communications satellite buses such as the HS601 available from Hughes Aerospace Corp, California, US, and the payload may be as disclosed in GB 2288913. Each satellite 4 is arranged to generate an array of beams covering a footprint beneath the satellite, each beam including a number of different frequency channels and time slots, as described in GB 2293725 and illustrated in Figure 4a.

On each beam, the satellite therefore transmits a set of downlink frequencies. The downlink frequencies on adjacent beams are different, so as to permit frequency re-use between beams. Each beam therefore acts somewhat in the manner of a cell of a conventional terrestrial cellular system. For example, there may be 61, 121 or 163 beams.

In this embodiment each downlink frequency carries a plurality of time division channels, so that each mobile terminal 2 communicates on a channel comprising a given time slot in a given frequency.

The satellites 4a are arranged in a constellation in sufficient numbers and suitable orbits to cover a substantial area of the globe (preferably to give global coverage).

For example 10 (or more) satellites may be provided in two mutually orthogonal intermediate circular orbits (or more) at an altitude of, for example, 10.500 kilometres (6 hour orbits) as shown in Figure 4b. Equally, however, larger numbers of lower satellites may be used, as disclosed in EP 0365885, or other publications relating to the Iridium system, for example.

In use, an attempt is made by the mobile terminal 2 to contact one or other of the networks. If it is possible to communicate both with the satellite network via satellite 4 and with the public land mobile network 110, then a selection is made, either by the user, or by a predetermined preference (for example selecting the PLMN 110 wherever possible). The selected network will then authenticate the terminal prior to (and during) communications, by a challenge/response signalling process utilising either the GSM or the IS-41 authentication data, as appropriate.

The mobile phone will then operate either as a satellite telephone or as terrestrial phone, with the relevant functional unit 200a or 200b working substantially independently and as it would do in a single mode phone.

### FIRST EMBODIMENT

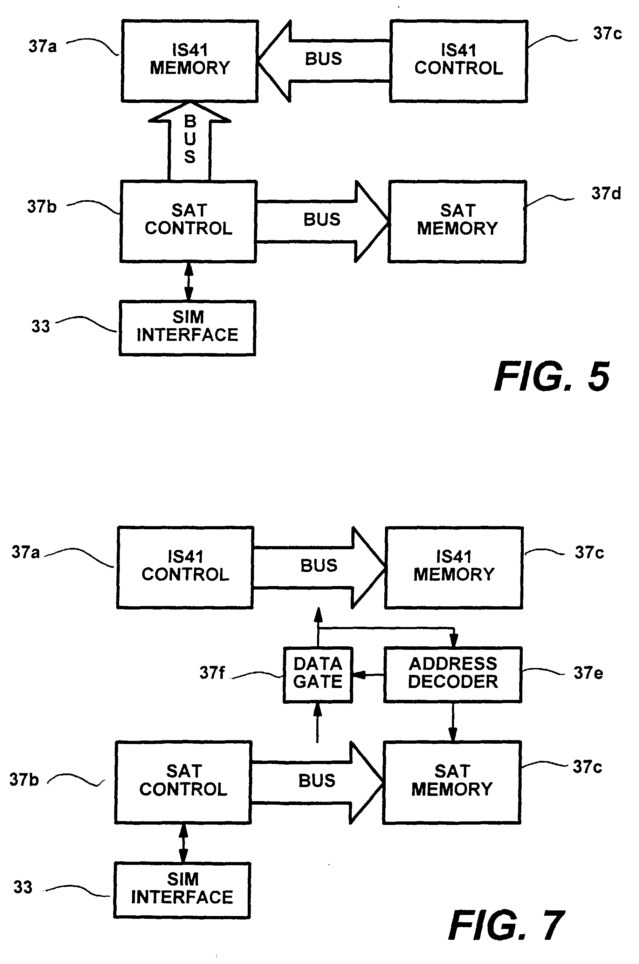

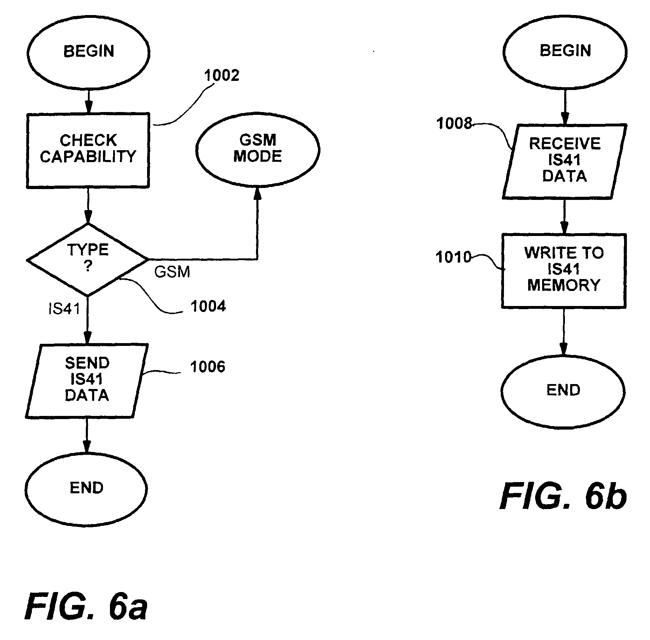

A first embodiment of the invention will now be described. Referring to Figures 5 and 6, in this embodiment, the IS-41 control device comprises a processor 37a linked to a memory 37c (e.g. EEPROM) via a bus, and the satellite control processor device comprises a processor 37b linked to a memory 37d via a bus. Additionally, the satellite control 37b is capable of writing to the memory 37c of the IS-41 controller 37a.

Referring to Figure 6a, in a step 1002, the SIM application 354 determines the type of phone within which it is located using the profile download process described in section 5 of GSM technical specification 11.14. If the phone is determined to be a dual mode phone in accordance with the present embodiments, then is a step 1004, the SIM application 354 determines the network to which the phone is to be connected, for example by generating a menu on display 39 and allowing the user to select between networks by using the keypad 38.

If the network is a GSM-type network, such as the ICO satellite communications network, the Iridium satellite communications network, or a terrestrial GSM PLMN, then the application terminates operation and the SIM behaves like a conventional (passive) GSM SIM until contact with the network is lost. The SIM therefore supplies authentication challenge response data (but not the original key) to the GSM processor 37b as in the prior GSM art.

If, on the other hand, it is determined that the phone is to be in communication with an IS-41 or similar PLMN 110, then in a step 1006, the application sends the A-key security data necessary for IS-41 communications to the GSM processor 37b via the SIM interface 35.

Referring to Figure 6b, in step 1008, the processor 37b receives the IS-41 security data, and in step 1010 writes the data to the memory locations in IS-41 memory 37c where the IS-41 control unit 37a will expect to read it.

Thus, the IS-41 security data is stored on the SIM 33 at a location determined by the application 354, and supplied from the SIM via the GSM control processor 37b, using SIM toolkit interface signalling, and finally is written to the IS-41 memory prior to initiation of communications via the IS-41 PLMN 110.

As a security measure, on removal of the SIM 33, and/or on loss of contact with the IS-41 network 110, the GSM processor 37b is arranged to delete the authentication data from the IS-41 processor memory 37c (e.g. by overwriting it).

In this embodiment, therefore, no modifications to the processes performed by the IS-41 processor 37a are required, since the GSM processor 37b has write access to the memory 37c of the IS-41 processor and can place the authentication data in the location where the IS-41 processor 31a expects to read it. Few modifications are necessary to the process of operation of the GSM processor 37b; it is merely necessary to add an initial routine corresponding to the process of Figure 6b to be performed on insertion of the SIM or change of network.

### SECOND EMBODIMENT

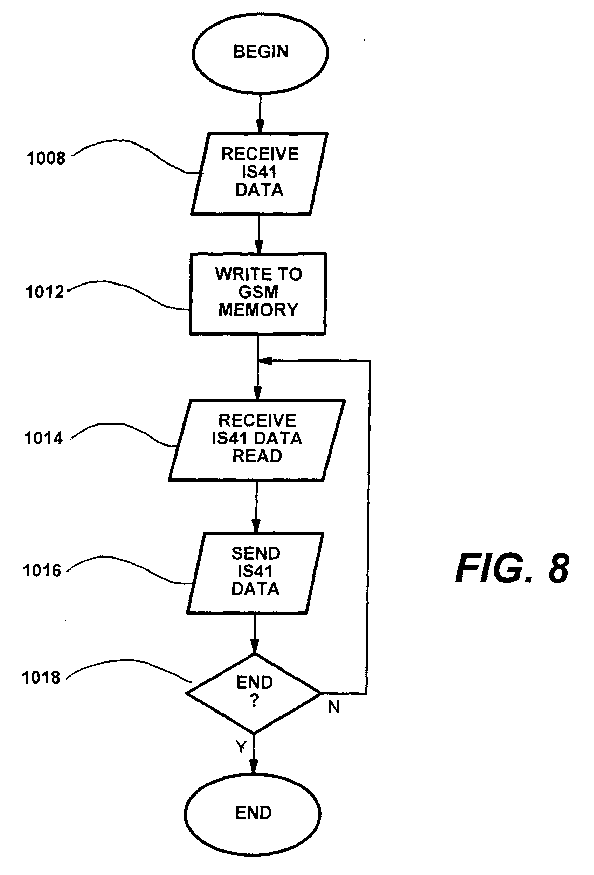

Referring to Figures 7 and 8, in this embodiment, a decoder gate array 37e is connected to the address bus interconnecting the IS-41 processor 37a and IS-41 memory 37c, and the data bus of the satellite memory 37d is connected to the IS-41 control processor 37a via a gate 37f.

When the address of the authentication data within the IS-41 memory 37c is placed on the IS-41 bus by the IS-41 control circuit 37a, the address decoder 37e generates an enable signal which enables the gate 37f, and generates the address in the satellite memory 37d where the IS-41 data is stored. The IS-41 security data is therefore placed on the data bus of the satellite memory 37d and passed through the data gate 37f to the data bus of the IS-41 control circuit 37a, which reads the security data as if it were read from the IS-41 memory 37c.

In this embodiment, the operation of the SIM 33 is substantially as described in relation to Figure 6a. However, the GSM processor 37a performs the process of Figure 8 instead of that of Figure 6b. Accordingly, after step 1008, described above in relation to the first embodiment, the IS-41 security data is written to a predetermined location in the GSM memory 37d in step 1012.

Until the communications session ceases (step 1018), on each occasion when an IS-41 security data read operation is detected by the address circuit decoder 37e, in step 1014, the IS-41 security data is sent in step 1016 via the data gate 37f to the IS-41 processor 37a.

Thus, in this embodiment, the IS-41 security data remains stored within the GSM subunit 200b, to which it was read from the SIM 33, but is supplied to the IS-41 subunit 200a as if stored in the memory 37c thereof. Thus, the only modifications necessary to the IS-41 circuits are the hardware decoder circuits coupled to the buses thereof.

In a modification of this embodiment, the code defining the operating program performed by the IS-41 processor 37a may be modified to replace memory access operations for retrieving the security data with an exchange of signals requesting supply of the security data from the GSM processor 37b, which would read the data from its own memory and transmit it, via a suitable connection wire, to the IS-41 processor 37a. Thus, no separate logic circuits 37e, 37f are required.

### THIRD EMBODIMENT

In this embodiment, the IS-41 data remains on the SIM card 33, for additional security, and is only temporarily retrieved when it is required for use. The hardware is the same as in the second embodiment.

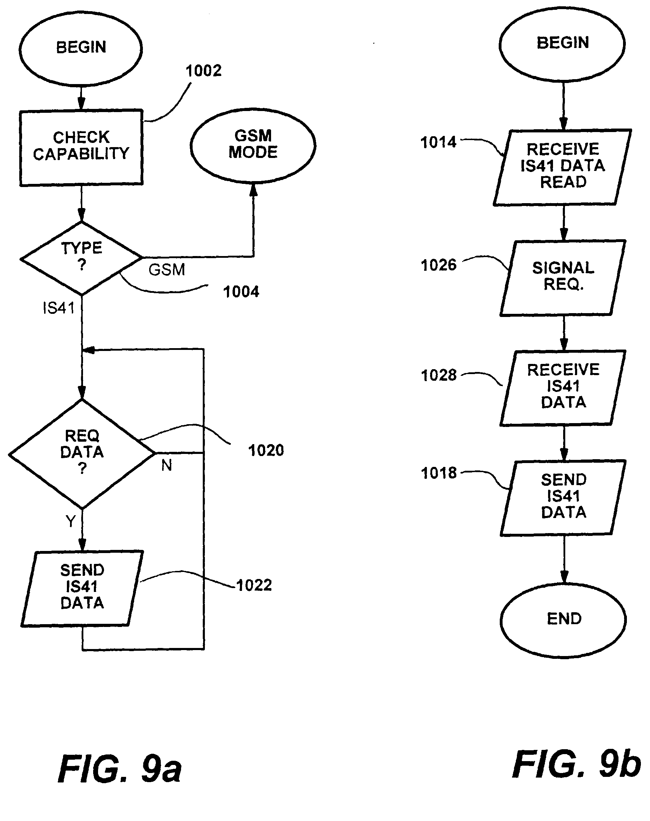

Accordingly, referring to Figure 9, following steps 1002 and 1004 discussed above in relation to Figure 6a, when, in step 1024, the GSM processor 37b detects and attempt to read IS-41 data (step 1014, as described above in relation to Figure 8), it signals a "request for data" signal to the SIM 33 via the interface 35 in step 1026.

On reading such a signal (step 1020), the application 354 running in the SIM 33 sends the IS-41 security data (step 1022) via the interface 35, to be received in step 1028 by the GSM processor 37b. The security data is then forwarded (step 1018, as described above in relation to Figure 8) to the IS-41 processor.

It will, of course, be recognised that in all the above embodiments the two processors need not be separate circuits but could be integrated together in a "system on a chip" design, or could even be realised as single processor running concurrent processor using a multi-threaded operating system, for example.

### SUMMARY

The embodiments of the invention provide the following advantages. As distinct from realising a dual mode phone they provide improved security, since the authentication data such as the A-key need not permanently be stored in the (relatively accessible) memory of the phone.

Additionally, they provide increased ease of use since the security data does not need manually to be entered by a user into the phone. Instead, the data can be written to the SIM card before the card is issued to the user, as with existing GSM phones. The card may then be transferred to another suitable phone without requiring the data to be re-entered into the phone by the user.

As compared with the above described proposal by Ericsson, the present embodiments have the advantage that if is not necessary to modify the specification for all SIM cards, including those which will only ever be used for single mode terminals rather than dual mode terminals, to include fields at particular predetermined addresses for storage of IS-41 security data.

Since it is expected that the number of dual mode terminals will be small relative to the number of single mode terminals, making such a modification is relative unlikely and, even if it were adopted, it would result in waste of valuable memory space on those SIM cards which were not used for dual mode applications.

By way of contrast, the present invention provides that those SIM cards which are to be capable of operating with dual mode terminals (i.e. those SIM cards for satellite system users) should be loaded with a SIM application to run on the card, the SIM application being modified at the time loading (i.e. by the system operator or the phone supplier) to include the unique authentication data associated with the particular subscriber for whom the SIM is intended. Thus, only those cards to be associated with dual mode terminals need to be modified in this way.

Further, the above described embodiments permit minimal modifications to the functionality of the IS-41 control unit 37a (whether realised as a separate entity or in combination with the GSM control unity 37b) and in particular do not require it to be capable of addressing the SIM itself; instead, the SIM communications functionality which is already provided in the GSM control processor 37b is utilised to extract the authentication data for the IS-41 network and supply it to the IS-41 processor; either once for storage in the memory, or as required. Thus, to a large extent, commercially available IS-41 and GSM or satellite communication core processes can be used with minor modifications.

By providing the extra functionality as an application (or part thereof) on an SIM card, and allowing the SIM card to control the operation of the terminal 2 using the tool kit routines, it is possible to make terminals which share some of the same components as GSM terminals. Thus, the cost of providing such terminals is reduced.

### OTHER EMBODIMENTS

It will be clear from the foregoing that the above described embodiment is merely one way of putting the invention into effect. Many other alternatives will be apparent to the skilled person and are within the scope of the present invention.

The numbers of satellites and satellite orbits indicated are purely exemplary. Smaller numbers of geostationary satellites, or satellites in higher altitude orbits, could be used; or larger numbers of low earth orbit (LEO) satellites could be used. Equally, different numbers of satellites in intermediate orbits could be used.

Whilst TDMA is one suitable access protocol, CDMA is equally envisaged as possible.

Equally, whilst the principles of the present invention are envisaged above as being applied to satellite communication systems, the possibility of the extension of the invention to other communications systems (e.g. digital terrestrial cellular systems such as GSM) is not excluded.

It will be understood that components of embodiments of the invention may be located in different jurisdictions or in space. For the avoidance of doubt, the scope of the protection of the following claims extends to any part of a telecommunications apparatus or system or any method performed by such a part, which contributes to the performance of the inventive concept.

## Claims

1. A multimode terminal for communicating with at least first and second communications networks, said first network being one in which terminals include a removable data store, said second network being one in which terminals do not normally include a removable data store: comprising;
a removable data store storing first and second security data for communications with respective first and second communications networks, such data for a said second network normally being stored in a non-removable data store;
an interface for communicating with said removable data store;
first processing means adapted to read data related to said first security data therefrom for communicating with a first network; and
second processing means for communicating with a said second network; characterised in that
the removable data store holds said second security data for access by an application program stored on said removable data store;
the application program supplies the second security data to the first processing means on a predetermined occasion; and
the first processing means supplies the second security data to the second processing means for use thereby.

2. The terminal of claim 1, in which the second processing means comprises a processor and a memory, and said processor is arranged to interrogate said memory to read said second security data.

3. The terminal of claim 2, in which the first processing means is arranged to supply the second security data to said memory to be subsequently read by said processor.

4. The terminal of claim 2, in which the first processing means is arranged to supply the second security data to said processor on an attempt thereby to read said second security data from said memory.

5. The terminal of claim 1, in which the first processing means comprises a processor and a memory, and said processor is arranged to store said second security data in said memory.

6. The terminal of any preceding claim, in which said second communications network conforms substantially to IS-41.

7. A terminal according to any preceding claim, in which the first communications network comprises a satellite link.

8. A removable processor module (35) for use in a telephony terminal (2) according to any preceding claim.

9. A removable processor module according to claim 8, which stores, and operates under the control of, an operating system (352) and an application (354).

10. A removable processor module (35) according to claim 9, in which the operating system (352) is arranged to operate the SIM Toolkit procedures specified in GSM 11.14.
